(19) Europäisches Patentamt
European Patent Office
Office européen des brevets

(11) **EP 4 063 183 B1**

(12) **EUROPÄISCHE PATENTSCHRIFT**

(45) Veröffentlichungstag und Bekanntmachung des Hinweises auf die Patenterteilung:
**26.06.2024   Patentblatt 2024/26**

(21) Anmeldenummer: **22157383.5**

(22) Anmeldetag: **18.02.2022**

(51) Internationale Patentklassifikation (IPC):
**B60L 58/40** (2019.01)    **B60L 50/53** (2019.01)
**B60L 50/75** (2019.01)    **B60L 58/13** (2019.01)

(52) Gemeinsame Patentklassifikation (CPC):
**B60L 58/40; B60L 50/53; B60L 50/75; B60L 58/13**

(54) **STEUEREINRICHTUNG FÜR EIN FAHRZEUG UND VERFAHREN ZU DEREN BETRIEB**

CONTROL DEVICE FOR A MOTOR VEHICLE AND METHOD FOR OPERATING SAME

DISPOSITIF DE COMMANDE POUR UN VÉHICULE ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2021   DE 102021202562**

(43) Veröffentlichungstag der Anmeldung:
**28.09.2022   Patentblatt 2022/39**

(73) Patentinhaber: **Siemens Mobility GmbH**
**81739 München (DE)**

(72) Erfinder: **Hassler, Stefan**
**91281 Kirchenthumbach, OT Neuzirkendorf (DE)**

(74) Vertreter: **Siemens Patent Attorneys**
**Postfach 22 16 34**
**80506 München (DE)**

(56) Entgegenhaltungen:
**WO-A1-2019/230110      DE-A1-102017 213 088**
**DE-A1-102018 004 716    JP-A- 2019 207 795**
**US-A1- 2019 084 435**

**Beschreibung**

Die Erfindung bezieht sich auf eine Steuereinrichtung für ein Fahrzeug, das mit einer Brennstoffzelle und einer Speichereinrichtung ausgestattet ist und einen vorgegebenen Streckenabschnitt befahren kann, wobei die Speichereinrichtung mit dem Ausgangsstrom der Brennstoffzelle ladbar ist.

Bei Eisenbahnschienenfahrzeugen mit Traktionssystemen, die eine Traktionsbatterie in Kombination mit einer Brennstoffzelle umfassen, kann die Brennstoffzelle dazu verwendet werden, die Traktionsbatterie zu laden. Das Betreiben von Traktionsbatterien in ihrem optimalen Betriebsfenster ist entscheidend für deren Lebensdauer hat damit große Auswirkung auf die Wartungskosten der Eisenbahnschienenfahrzeuge.

Das Dokument DE 10 2017 213 088 A1 offenbart ein Fahrzeug mit einer Brennstoffzelle und einem Navigationssystem mit einer Routenplanungsfunktion. Das Dokument DE 10 2018 004 716 A1 offenbart ein Schienenfahrzeug mit Traktionsbatterien und Brennstoffzellen, wobei sich das Schienenfahrzeug im Fahrbetrieb mit niedrigem Energiebedarf mittels der Brennstoffzellen bewegt, und wobei die Traktionsbatterien an Strominseln an Stellen erhöhten Energiebedarfs Energie aufladen.

Der Erfindung liegt die Aufgabe zugrunde, eine Steuereinrichtung anzugeben, die den Ausgangsstrom der Brennstoffzelle und damit deren Ladeleistung derart einstellen kann, dass die Speichereinrichtung in ihrem optimalen Ladezustandsbetriebsfenster betrieben wird.

Danach ist erfindungsgemäß vorgesehen, dass die Steuereinrichtung derart ausgestaltet ist, dass sie den Ausgangsstrom der Brennstoffzelle auf der Basis einer für den vorgegebenen Streckenabschnitt festgelegten Kennlinie einstellt, die den jeweiligen Ausgangsstrom der Brennstoffzelle in Abhängigkeit von dem jeweiligen Ladezustand der Speichereinrichtung definiert, wobei die Kennlinie von einem Steuerparameter abhängt. Außerdem ist die Steuereinrichtung derart ausgestaltet, dass sie nach dem Durchfahren des Streckenabschnitts prüft, ob ein von dem mittleren Ladezustand der Speichereinrichtung während der Fahrt in dem Streckenabschnitt abhängiger Hilfswert von einem vorgegebenen Sollwert abweicht und den Steuerparameter in Abhängigkeit von dem Ergebnis der Prüfung für die jeweils nächste Fahrt in demselben Streckenabschnitt verändert.

Ein wesentlicher Vorteil der erfindungsgemäßen Steuereinrichtung ist darin zu sehen, dass Wissen, das anhand vorheriger Fahrten durch denselben Streckenabschnitt erarbeitet und in Form der Kennlinie und des Steuerparameters gespeichert wird, für zukünftige Fahrten herangezogen werden kann, so dass mit ansteigender Zahl an Fahrten in demselben Streckenabschnitt die Steuerung der Brennstoffzelle immer besser wird und die Speichereinrichtung immer genauer in ihrem optimalen Betriebsfenster gehalten werden kann.

Vorteilhaft ist es, wenn die Steuereinrichtung den Hilfswert zumindest auch unter Heranziehung einer Integration oder Summation der den Ladezustand während der Fahrt in dem Streckenabschnitt angebenden Ladezustandswerte ermittelt.

Bei einer vorteilhaften Ausgestaltung ist vorgesehen, dass der Hilfswert H ermittelt wird unter Heranziehung einer Integration gemäß

$$\int_{t1}^{t2}(SOC(t)-SOCopt)\,dt$$

.

Bei einer anderen vorteilhaften Ausgestaltung ist vorgesehen, dass der Hilfswert H ermittelt wird unter Heranziehung einer Summation gemäß

$$\sum_{i=1}^{N}(SOC(i)-SOCopt)$$

.

Weicht der Ladezustand der Speichereinrichtung beim Einfahren in den Streckenabschnitt vom Sollladezustand ab, so wird diese Differenz vorzugsweise berücksichtigt, indem die Ladezustandswerte oder der Hilfswert durch vorzeichenrichtiger Subtraktion der Differenz verschoben werden.

Weist der Ladezustand der Speichereinrichtung beim Einfahren in den Streckenabschnitt den Sollladezustand auf, so ist es vorteilhaft, wenn der Hilfswert H ermittelt wird gemäß

$$H = \int_{t1}^{t2}(SOC(t)-SOCopt)\,dt$$

wobei t1 den Zeitpunkt beim Einfahren in den Streckenabschnitt, t2 den Zeitpunkt beim Verlassen des Streckenabschnitts, SOC(t) den Ladezustandswert zum Zeitpunkt t und SOCopt einen mittleren Sollladezustand in dem Streckenabschnitt bezeichnet.

Alternativ kann, wenn der Ladezustand der Speichereinrichtung beim Einfahren in den Streckenabschnitt den Sollladezustand aufweist, der Hilfswert H ermittelt werden gemäß

$$H = \sum_{i=1}^{N}(SOC(i)-SOCopt)$$

wobei SOC(n=1) den vor dem Einfahren, beim Einfahren oder nach dem Einfahren ersten erfassten Ladezustandswert und SOC(N) den vor dem Ausfahren, beim Ausfahren oder nach dem Ausfahren letzten erfassten Ladezustandswert bezeichnet.

Mit Blick auf ein schnelles Heranführen des Steuerparameters an seinen optimalen Wert wird es als vorteilhaft angesehen, wenn die Steuereinrichtung den Steuerparameter um einen vorgegebenen Veränderungswert reduziert, wenn sie nach einem Durchfahren des Streckenabschnitts feststellt, dass der Hilfswert sowohl für die letzte Fahrt als auch für die vorletzte Fahrt in dem Streckenabschnitt größer als ein vorgegebener Schwellenwert war, und um den vorgegebenen Veränderungswert erhöht, wenn sie nach einem Durchfahren des Streckenabschnitts feststellt, dass der Hilfswert sowohl für die letzte Fahrt als auch für die vorletzte Fahrt in dem Streckenabschnitt kleiner als der Schwellenwert war.

Mit Blick auf ein schnelles Heranführen des Steuerparameters an seinen optimalen Wert wird es außerdem als vorteilhaft angesehen wenn die Steuereinrichtung den aktuellen Veränderungswert unter Bildung eines aktualisierten Veränderungswerts reduziert, insbesondere halbiert, wenn sie nach einem Durchfahren des Streckenabschnitts feststellt, dass der Hilfswert bei der letzten Fahrt größer als der Schwellenwert und bei der vorletzten Fahrt kleiner als der Schwellenwert war oder umgekehrt bei der letzten Fahrt kleiner als der Schwellenwert und bei der vorletzten Fahrt größer als der Schwellenwert war.

Der Hilfswert ist vorzugsweise subtraktiv auf den mittleren Sollladezustand bezogen und der Schwellenwert beträgt vorzugsweise null.

Die Steuereinrichtung reduziert vorzugsweise nach einer jeden Aktualisierung den Steuerparameter um den aktualisierten Veränderungswert, wenn der Hilfswert bei der letzten Fahrt größer als Null war, und erhöht ihn um den aktualisierten Veränderungswert reduziert, wenn der Hilfswert bei der letzten Fahrt kleiner als Null war.

Die Kennlinie umfasst vorzugsweise einen ersten Kennlinienabschnitt, der sich bis zu einem Trennwert erstreckt, und einen zweiten Kennlinienabschnitt, der sich ab dem Trennwert in Richtung höherer Ladezustände erstreckt.

Die Kennlinie weist beim Trennwert bzw. an der Übergangsstelle zwischen dem ersten Kennlinienabschnitt und dem zweiten Kennlinienabschnitt vorzugsweise eine Knickstelle auf, ist also mathematisch stetig, aber nicht differenzierbar, um bei Überschreiten des Trennwerts besonders schnell reagieren zu können.

Der erste Kennlinienabschnitt erstreckt sich vorzugsweise von einem Ladewert, der die leere Speicherzelle beschreibt, bis zum Trennwert. Der erste Kennlinienabschnitt ist vorzugsweise konstant und beschreibt einen maximal gewünschten Ausgangsstrom der Brennstoffzelle.

Der zweite Kennlinienabschnitt erstreckt sich vorzugsweise von dem Trennwert bis zu einem Ladewert, der die vollgeladene Speicherzelle beschreibt.

Der zweite Kennlinienabschnitt ist vorzugsweise linear abfallend und verbindet den Ausgangsstromwert an der Trennstelle vorzugsweise mit einem Ausgangsstrom von Null durch eine Gerade.

Die Erfindung bezieht sich darüber hinaus auf ein Fahrzeug, insbesondere Schienenfahrzeug, das mit einer Brennstoffzelle und einer Speichereinrichtung ausgestattet ist und einen vorgegebenen Streckenabschnitt befahren kann, wobei die Speichereinrichtung mit dem Ausgangsstrom der Brennstoffzelle ladbar ist. Erfindungsgemäß ist bzgl. des Fahrzeugs vorgesehen, dass dieses eine die Brennstoffzelle ansteuernde Steuereinrichtung aufweist, wie sie oben beschrieben worden ist.

Bezüglich der Vorteile und vorteilhafter Ausgestaltungen des erfindungsgemäßen Fahrzeugs sei auf die obigen Ausführungen im Zusammenhang mit der erfindungsgemäßen Steuereinrichtung sowie deren vorteilhafter Ausgestaltungen verwiesen.

Die Erfindung bezieht sich darüber hinaus auf ein Verfahren zum Steuern des Ausgangsstrom einer Brennstoffzelle, deren Ausgangsstrom eine Speichereinrichtung aufladen kann, während der Fahrt eines Fahrzeugs in einem vorgegebenen Streckenabschnitt. Erfindungsgemäß ist vorgesehen, dass das Steuern des Ausgangsstroms auf der Basis einer Kennlinie durchgeführt wird, die den jeweiligen Ausgangsstrom der Brennstoffzelle während der Fahrt in dem Streckenabschnitt in Abhängigkeit von dem jeweiligen Ladezustand der Speichereinrichtung festlegt, wobei die Kennlinie von einem Steuerparameter abhängt, und nach einem Durchfahren des Streckenabschnitts geprüft wird, ob ein von dem mittleren Ladezustand der Speichereinrichtung während der Fahrt in dem Streckenabschnitt abhängiger Hilfswert von einem vorgegebenen Sollwert abweicht und der Steuerparameter in Abhängigkeit von dem Ergebnis der Prüfung für die jeweils nächste Fahrt in demselben Streckenabschnitt verändert wird.

Bezüglich der Vorteile und vorteilhafter Ausgestaltungen des erfindungsgemäßen Verfahrens sei auf die obigen Ausführungen im Zusammenhang mit der erfindungsgemäßen Steuereinrichtung sowie deren vorteilhafter Ausgestaltungen verwiesen.

Vorteilhaft ist es, wenn der Hilfswert zumindest auch unter Heranziehung einer Integration oder Summation der den Ladezustand während der Fahrt in dem Streckenabschnitt angebenden Ladezustandswerte ermittelt wird und der aktuelle Veränderungswert unter Bildung eines aktualisierten Veränderungswerts reduziert, insbesondere halbiert, wird, wenn nach einem Durchfahren des Streckenabschnitts festgestellt wird, dass der Hilfswert bei der letzten Fahrt größer als der Schwellenwert und bei der vorletzten Fahrt kleiner als der Schwellenwert war oder umgekehrt bei der letzten Fahrt kleiner als der Schwellenwert und bei der vorletzten Fahrt größer als der Schwellenwert war.

Die Erfindung wird nachfolgend anhand von Ausführungsbeispielen näher erläutert; dabei zeigen beispielhaft

Figur 1 ein Ausführungsbeispiel für ein erfindungsgemäßes Schienenfahrzeug, das mit einem Ausführungsbeispiel für eine erfindungsgemäße Steuereinrichtung ausgestattet ist,

Figur 2    ein Ausführungsbeispiel für eine Kennlinie, die die Steuereinrichtung gemäß Figur 1 heranzieht,

Figur 3    einen beispielhaften Verlauf des Ladezustands über der Zeit während der Fahrt des Schienenfahrzeugs in einem Streckenabschnitt,

Figur 4    ein Ausführungsbeispiel für die Steuereinrichtung gemäß Figur 1 näher im Detail,

Figur 5    eine bevorzugte Arbeitsweise der Steuereinrichtung gemäß Figur 4 anhand eines Flussdiagramms und

Figur 6    eine vorteilhafter Weiterbildung der in Figur 5 gezeigten Arbeitsweise.

In den Figuren werden der Übersicht halber für identische oder vergleichbare Komponenten stets dieselben Bezugszeichen verwendet.

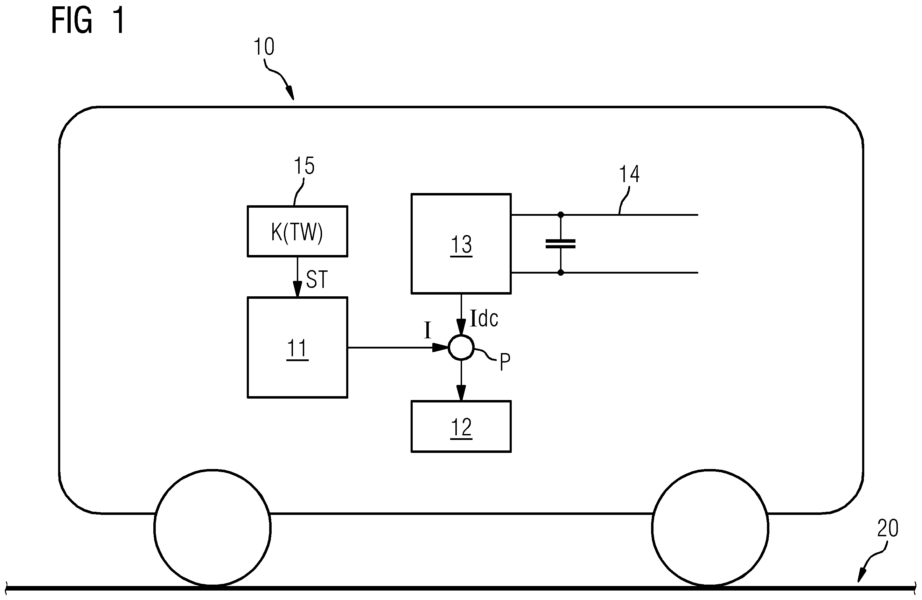

Die Figur 1 zeigt ein Schienenfahrzeug 10 während der Fahrt in einem vorab definierten Streckenabschnitt 20.

Das Schienenfahrzeug 10 umfasst unter anderem eine Brennstoffzelle 11 und eine elektrische Speichereinrichtung 12, beispielsweise in Form einer Batterie, die über einen gemeinsamen Knotenpunkt P mit einem DC/DC-Steller 13 in Verbindung stehen. Der DC/DC-Steller 13 verbindet den Knotenpunkt P mit einem Gleichspannungszwischenkreis 14, mit dem beispielsweise aus Gründen der Übersicht nicht gezeigte Antriebskomponenten des Schienenfahrzeugs 10 mit Energie gespeist werden können. Der DC/DC-Steller 13 entnimmt dem Knotenpunkt P den Strom Idc, der nötig ist, um eine vorgegebene Zwischenkreisspannung im Gleichspannungszwischenkreis 14 zu halten, und speist beispielsweise Strom Idc in den Knotenpunkt ein, wenn Bremsenergie beim Bremsen des Schienenfahrzeugs 10 zur Verfügung steht.

Eine Steuereinrichtung 15 dient dazu, den Ausgangsstrom I der Brennstoffzelle 11 zu steuern und damit das Laden der Speichereinrichtung 12 zu beeinflussen bzw. zu bestimmen.

Die Steuereinrichtung 15 stellt den Ausgangsstrom I der Brennstoffzelle 11 auf der Basis einer Kennlinie K ein, die von einem Steuerparameter abhängt. Bei dem Ausführungsbeispiel gemäß Figur 1 wird der Steuerparameter durch einen Trennwert TW gebildet.

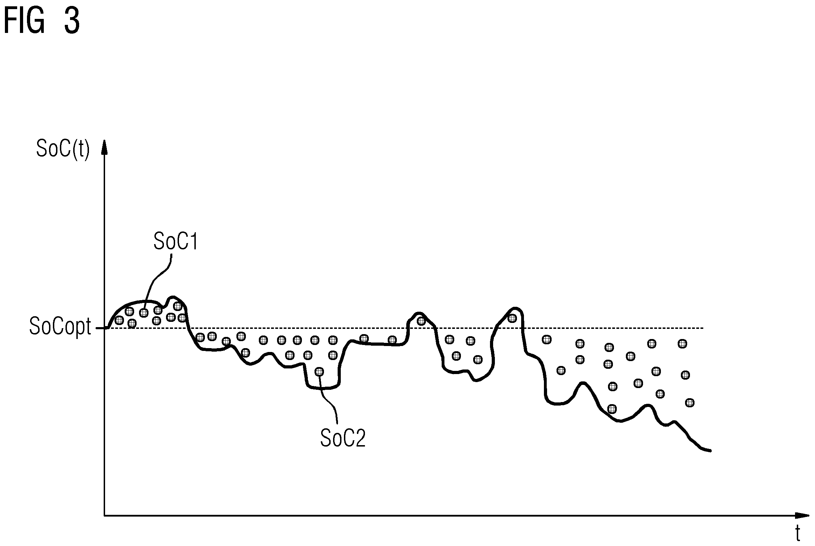

Nach einem jeden Durchfahren des Streckenabschnitts 20 prüft die Steuereinrichtung 15, ob ein von dem mittleren Ladezustand der Speichereinrichtung 12 während der Fahrt in dem Streckenabschnitt 20 abhängiger Hilfswert H von einem vorgegebenen Sollwert abweicht. Ist dies der Fall, so verändert sie den Steuerparameter für die jeweils nächste Fahrt in demselben Streckenabschnitt 20. Der Hilfswert H ist vorzugsweise auf einen Sollladezustand SoCopt (vgl. Figur 3) bezogen und beträgt null, wenn der mittlere Ladezustand der Speichereinrichtung 12 dem Sollladezustand SoCopt entspricht.

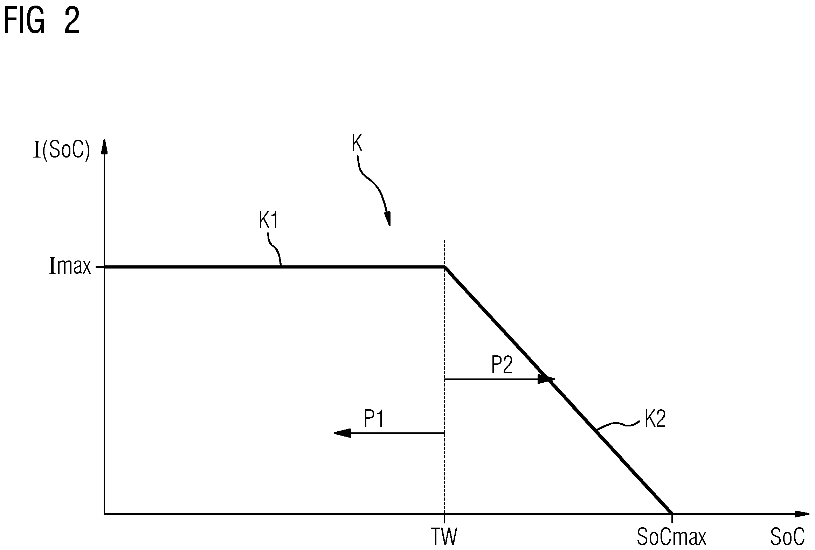

Die Figur 2 zeigt ein Ausführungsbeispiel für die Kennlinie K gemäß Figur 1 näher im Detail. Die Kennlinie K umfasst einen ersten Kennlinienabschnitt K1, der sich bis zu einem Trennwert TW erstreckt, und einen zweiten Kennlinienabschnitt K2, der sich ab dem Trennwert TW in Richtung höherer Ladezustände erstreckt. Der Trennwert TW bildet den Steuerparameter, den die Steuereinrichtung 15 beim Steuern berücksichtigt.

Der erste Kennlinienabschnitt K1 erstreckt sich von einem Ladezustandswert SoC=0, der die leere Speichereinrichtung 12 beschreibt, bis zu dem Trennwert TW. Der erste Kennlinienabschnitt K1 ist vorzugsweise konstant und beschreibt einen maximal gewünschten Ausgangsstrom Imax, der dem optimalen Betriebsstrom der Brennstoffzelle 11 entspricht.

Der zweite Kennlinienabschnitt K2 erstreckt sich von dem Trennwert TW bzw. Steuerparameter bis zu einem maximalen Ladezustandswert SoCmax, der die vollgeladene Speicherzelle beschreibt. Der zweite Kennlinienabschnitt K2 ist vorzugsweise linear abfallend und verbindet den Ausgangsstromwert Imax an der Trennstelle mit einem Ausgangsstrom I=0 vorzugsweise durch eine Gerade.

Beim Trennwert TW bzw. an der Übergangsstelle zwischen dem ersten Kennlinienabschnitt K1 und dem zweiten Kennlinienabschnitt K2 weist die Kennlinie K eine Knickstelle auf, so dass sie dort zwar mathematisch stetig, aber nicht differenzierbar ist.

In der Figur 2 ist durch einen Pfeil P1 angedeutet, dass die Steuereinrichtung 15 nach einem Durchfahren des Streckenabschnitts 20 den Steuerparameter bzw. den Trennwert TW nach links in Richtung eines kleineren Ladezustandswerts verschiebt, wenn der von dem mittleren Ladezustand der Speichereinrichtung 12 abhängige Hilfswert H, der - wie erwähnt - vorzugsweise auf den Sollladezustand SoCopt bezogen ist, Null überschreitet, also die Speichereinrichtung 12 im zeitlichen Mittel während der Fahrt in dem Streckenabschnitt 20 mehr geladen war als gewünscht.

Durch einen Pfeil P2 ist angedeutet, dass die Steuereinrichtung 15 nach einem Durchfahren des Streckenabschnitts 20 den Steuerparameter bzw. den Trennwert TW nach rechts in Richtung eines größeren Ladezustandswerts verschiebt, wenn der Hilfswert H Null unterschreitet, also die Speichereinrichtung 12 im zeitlichen Mittel während der Fahrt in dem Streckenabschnitt 20 weniger geladen war als gewünscht.

Die Figur 3 zeigt einen beispielhaften Verlauf des Ladezustands SOC über der Zeit t während der Fahrt in dem Streckenabschnitt 20. Mit dem Bezugszeichen SoCl ist beispielhaft ein Ladezustandswert markiert, der größer als der Sollladezustand SoCopt ist. Mit dem Bezugszeichen SoC2 ist beispielhaft ein Ladezustandswert markiert, der kleiner als der Sollladezustand SoCopt ist.

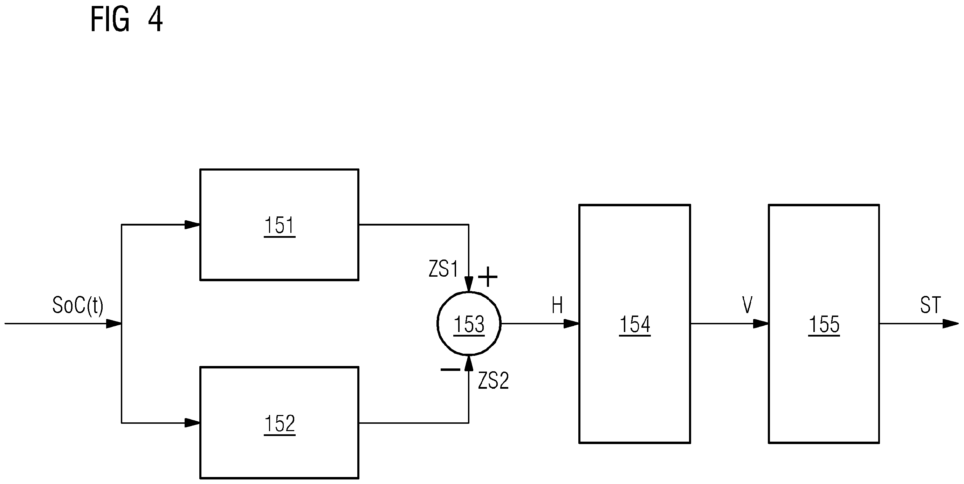

Die Figur 4 zeigt in Form eines Blockschaltbilds beispielhaft eine bevorzugte Arbeitsweise bzw. Aufbau der Steuereinrichtung 15 gemäß Figur 1.

Nach Abschluss einer jeden Fahrt durch den Streckenabschnitt 20 gemäß Figur 1 summiert ein erster Addierer 151 unter Bildung einer ersten Zwischensumme ZS1 alle Ladezustandswerte gemäß Figur 3 auf, die größer als der Sollladezustand ScO_opt sind. Ein zweiter Addierer 152 summiert unter Bildung einer zweiten Zwischensumme ZS2 alle Ladezustandswerte gemäß Figur 3 auf, die kleiner als der Sollladezustand ScO_opt sind. Mit einem nachgeordneten Differenzbildner 153 wird nachfolgend der Hilfswert H durch Subtraktion der zweiten Zwischensumme ZS2 von der ersten Zwischensumme ZS1 gebildet.

Der Hilfswert H ist durch die beschriebene Subtraktion auf den mittleren Sollladezustand ScOopt bezogen.

Der Hilfswert H wird anschließend von einer Steuerparameteroptimierungseinrichtung 154 weiterverarbeitet, die in Abhängigkeit von dem jeweiligen Hilfswert H den Steuerparameter bzw. die Trennstelle gemäß Figur 3 für die jeweils nächste Fahrt in demselben Streckenabschnitt 20 nach links oder rechts verschiebt. Das Ausmaß der Verschiebung wird von durch einen aktuellen Veränderungswert V definiert.

Der aktuelle Veränderungswert V wird von der Steuerparameteroptimierungseinrichtung 154 zu einem Einstellmodul 155 der Steuereinrichtung 15 übermittelt, das bei einem nachfolgenden Durchfahren des Streckenabschnitts 20 gemäß Figur 1 den Ausgangsstrom I der Brennstoffzelle 11 in Abhängigkeit von dem jeweiligen Ladezustand der Speichereinrichtung 12 mittels eines Steuersignals ST einstellt. Der Ladezustand kann beispielsweise geschätzt werden anhand einer gemessenen oder errechneten Leerlaufspannung der Speichereinrichtung 12 und einer für die Speichereinrichtung 12 vor Betrieb gemessenen Energiekurve, die den jeweiligen Ladezustand in Abhängigkeit von der jeweiligen Leerlaufspannung angibt.

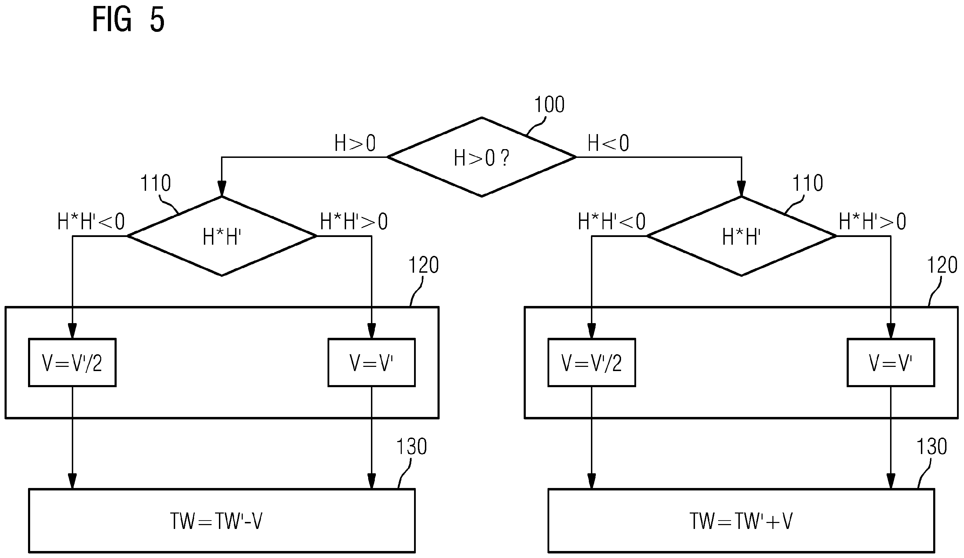

Die Figur 5 zeigt anhand eines Flussdiagramms eine bevorzugte Arbeitsweise der Steuerparameteroptimierungseinrichtung 154 gemäß Figur 4.

Zunächst prüft die Steuerparameteroptimierungseinrichtung 154 in einem Verfahrensschritt 100, ob der subtraktiv auf den mittleren Sollladezustand SoCopt bezogene Hilfswert H größer oder kleiner als Null ist und die Trennstelle gemäß Figur 3 nach links oder rechts geschoben werden muss.

Anschließend prüft die Steuerparameteroptimierungseinrichtung 154, ob der Veränderungswert V', der nach der vorletzten Fahrt ermittelt worden war, unverändert weiter verwendet werden soll oder reduziert werden kann. Diese Prüfung umfasst zunächst eine Vorzeichenprüfung 110 des Produkts H*H' gemäß

$$H*H' \; > \; 0 \; \Rightarrow \; V \; = \; V'$$

(Veränderungswert V bleibt unverändert)

$$H*H' \; < \; 0 \; \Rightarrow \; V \; = \; V'/2$$

(Veränderungswert V wird halbiert)
wobei

- H den aktuellen Hilfswert nach der letzten Fahrt durch den Streckenabschnitt 20 gemäß Figur 1 beschreibt,
- H' den Hilfswert nach der vorletzten Fahrt durch den Streckenabschnitt 20 gemäß Figur 1 beschreibt,
- V' den Veränderungswert, der nach der vorletzten Fahrt zum Verschieben der Kennlinie K herangezogen wurde, beschreibt und
- V den aktuellen Veränderungswert V beschreibt, der zum aktuellen Verschieben der Kennlinie herangezogen werden soll.

In einem nachgeordneten Verfahrensschritt 120 wird der Veränderungswert V ggf. halbiert oder unverändert gelassen.

Der aktuelle Veränderungswert V wird in einem nachfolgenden Verfahrensschritt 130 zu dem Einstellmodul 155 gemäß Figur 4 übermittelt und es wird der Trennwert TW modifiziert. Außerdem wird der aktuelle Veränderungswert V für den nächsten Verfahrensdurchlauf, der nach Abschluss der nächsten Fahrt durch denselben Streckenabschnitt 20 gemäß Figur 1 durchgeführt werden wird, gespeichert.

Zusammengefasst wird die Steuerparameteroptimierungseinrichtung 154 den Trennwert TW bei dem Ausführungsbeispiel gemäß Figur 5 um den alten Veränderungswert V reduzieren, wenn sie nach dem letzten Durchfahren des Streckenabschnitts 20 feststellt, dass der Hilfswert H sowohl für die letzte Fahrt als auch für die vorletzte Fahrt in dem Streckenabschnitt 20 größer als Null war, und um den alten Veränderungswert V erhöhen, wenn sie nach dem letzten Durchfahren des Streckenabschnitts 20 feststellt, dass der Hilfswert H sowohl für die letzte Fahrt als auch für die vorletzte Fahrt in dem Streckenabschnitt 20 kleiner als Null war.

Stellt die Steuerparameteroptimierungseinrichtung 154 nach dem letzten Durchfahren des Streckenabschnitts 20 hingegen fest, dass der Hilfswert H bei der letzten Fahrt größer als Null und bei der vorletzten Fahrt kleiner als Null war oder umgekehrt bei der letzten Fahrt kleiner als Null und bei der vorletzten Fahrt größer als Null war, so wird sie den alten Veränderungswert V zunächst halbieren und den halbierten Veränderungswert V als neuen bzw. aktuellen Veränderungswert V, der den alten ersetzt, weiterverwenden.

Der so ermittelte neue bzw. aktuelle Veränderungswert V wird nach dem nächsten Durchfahren des Streckenabschnitts 20 gemäß Figur 1 als Basis- bzw. Ausgangswert für den Veränderungswert verwendet. In dieser Weise wird erreicht, dass der Veränderungswert V nach jedem Berechnungsdurchlauf bzw. nach jedem Durchfahren des Streckenabschnitts 20 gemäß Figur 1 halbiert wird, sofern der Steuerparameter bzw. der Trennwert TW schon sehr dicht am Optimum liegt, so dass das Verfahren in Richtung Optimum weiter konvergiert.

Wenn das Schienenfahrzeug 20 mit einem Ladezustand SoCstart, der von dem Sollladezustand SoCopt abweicht, in den Streckenabschnitt 20 einfährt, so wird die Differenz SoCstart-SoCopt vorzugsweise berücksichtigt. Dieser Fall kann beispielsweise eintreten, wenn das Schienenfahrzeug 10 zuvor auf einer anderen Strecke unterwegs war, bei der ein anderer Sollladezustand erreicht werden sollte.

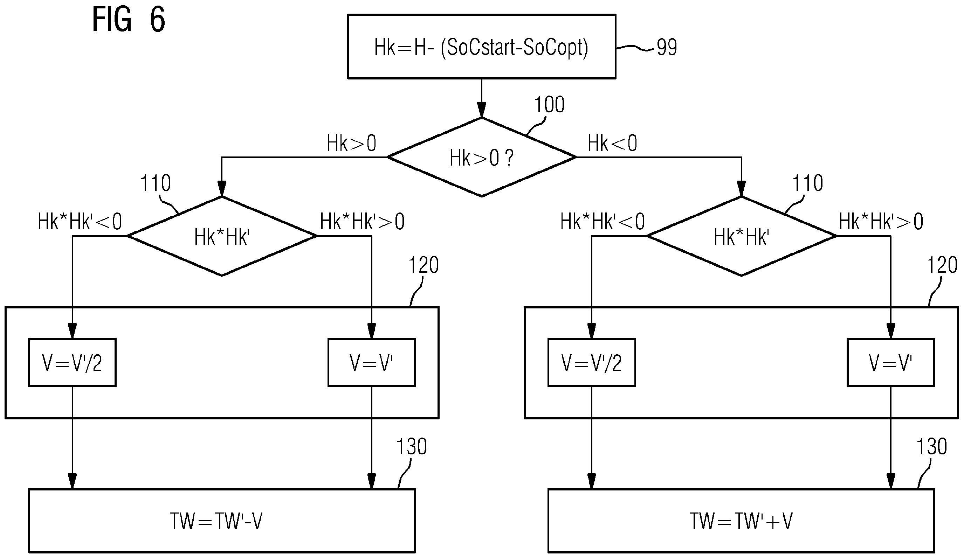

Vorteilhaft ist es, wenn von dem Hilfswert H, der beispielsweise wie im Zusammenhang mit den Figuren 2 bis 5 erläutert ermittelt wird, zunächst in einem Verfahrensschritt 99 (vgl. Figur 6) die Differenz SoCstart-SoCopt unter Bildung eines korrigierten Hilfswerts Hk vorzeichenrichtig abgezogen wird gemäß

$$Hk = H - (SoCstart-SoCopt)$$

und anschließend die Verfahrensschritte 100 bis 130 auf der Basis des korrigierten Hilfswerts Hk durchgeführt werden, wie beispielhaft in der Figur 6 gezeigt ist.

Alternativ können auch die ermittelten Ladezustandswerte SoC jeweils für sich korrigiert werden, indem die Differenz SoCstart-SoCopt vorzeichenrichtig abgezogen wird.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Steuereinrichtung (15) für ein Fahrzeug (10), das mit einer Brennstoffzelle (11) und einer Speichereinrichtung (12) ausgestattet ist und einen vorgegebenen Streckenabschnitt (20) befahren kann, wobei die Speichereinrichtung (12) mit dem Ausgangsstrom (I) der Brennstoffzelle (11) ladbar ist, **dadurch gekennzeichnet, dass**

   - die Steuereinrichtung (15) derart ausgestaltet ist, dass sie den Ausgangsstrom (I) der Brennstoffzelle (11) auf der Basis einer für den vorgegebenen Streckenabschnitt (20) festgelegten Kennlinie (K) einstellt, die den jeweiligen Ausgangsstrom (I) der Brennstoffzelle (11) in Abhängigkeit von dem jeweiligen Ladezustand der Speichereinrichtung (12) definiert, wobei die Kennlinie (K) von einem Steuerparameter abhängt, und
   - die Steuereinrichtung (15) außerdem derart ausgestaltet ist, dass sie nach dem Durchfahren des Streckenabschnitts (20) prüft, ob ein von dem mittleren Ladezustand der Speichereinrichtung (12) während der Fahrt in dem Streckenabschnitt (20) abhängiger Hilfswert (H) von einem vorgegebenen Sollwert abweicht und den Steuerparameter in Abhängigkeit von dem Ergebnis der Prüfung für die jeweils nächste Fahrt in demselben Streckenabschnitt (20) verändert.

2. Steuereinrichtung (15) nach Anspruch 1, **dadurch gekennzeichnet, dass** die Steuereinrichtung (15) den Hilfswert (H) zumindest auch unter Heranziehung einer Integration oder Summation der den Ladezustand während der Fahrt in dem Streckenabschnitt (20) angebenden Ladezustandswerte (SoC) ermittelt.

3. Steuereinrichtung (15) nach einem der voranstehenden Ansprüche,

   **dadurch gekennzeichnet, dass** der Hilfswert (H) ermittelt wird unter Heranziehung einer Integration gemäß $\int_{t1}^{t2}(SOC(t)-SOCopt)dt$, insbesondere gemäß:

   $$H = \int_{t1}^{t2}(SOC(t)-SOCopt)\,dt$$

   wobei t1 den Zeitpunkt beim Einfahren in den Streckenabschnitt (20), t2 den Zeitpunkt beim Verlassen des Streckenabschnitts (20), SOC(t) den Ladezustandswert (SoC) zum Zeitpunkt t und SOCopt einen mittleren Sollladezustand (SoCopt) in dem Streckenabschnitt (20) bezeichnet,
   oder
   unter Heranziehung einer Summation $\sum_{i=1}^{N}(SOC(i)-SOCopt)$, insbesondere gemäß:

   $$H = \sum_{i=1}^{N}(SOC(i)-SOCopt)$$

   wobei SOC(n=1) den vor dem Einfahren, beim Einfahren oder nach dem Einfahren ersten erfassten Ladezustandswert (SoC) und SOC(N) den vor dem Ausfahren, beim Ausfahren oder nach dem Ausfahren letzten erfassten Ladezustandswert (SoC) bezeichnet.

4. Steuereinrichtung (15) nach einem der voranstehenden Ansprüche,
**dadurch gekennzeichnet, dass** die Steuereinrichtung (15) den Steuerparameter

- um einen vorgegebenen Veränderungswert (V) reduziert, wenn sie nach einem Durchfahren des Streckenabschnitts (20) feststellt, dass der Hilfswert (H) sowohl für die letzte Fahrt als auch für die vorletzte Fahrt in dem Streckenabschnitt (20) größer als ein vorgegebener Schwellenwert war, und
- um den vorgegebenen Veränderungswert (V) erhöht, wenn sie nach einem Durchfahren des Streckenabschnitts (20) feststellt, dass der Hilfswert (H) sowohl für die letzte Fahrt als auch für die vorletzte Fahrt in dem Streckenabschnitt (20) kleiner als der Schwellenwert war.

5. Steuereinrichtung (15) nach einem der voranstehenden Ansprüche,
**dadurch gekennzeichnet, dass** die Steuereinrichtung (15) den aktuellen Veränderungswert (V) unter Bildung eines aktualisierten Veränderungswerts (V) reduziert, insbesondere halbiert, wenn sie nach einem Durchfahren des Streckenabschnitts (20) feststellt, dass der Hilfswert (H) bei der letzten Fahrt größer als der Schwellenwert und bei der vorletzten Fahrt kleiner als der Schwellenwert war oder umgekehrt bei der letzten Fahrt kleiner als der Schwellenwert und bei der vorletzten Fahrt größer als der Schwellenwert war.

6. Steuereinrichtung (15) nach Anspruch 5,
**dadurch gekennzeichnet, dass**

- der Hilfswert (H) subtraktiv auf den mittleren Sollladezustand (SoCopt) bezogen ist und der Schwellenwert Null beträgt und
- die Steuereinrichtung (15) nach einer jeden Aktualisierung den Steuerparameter um den aktualisierten Veränderungswert (V) reduziert, wenn der Hilfswert (H) bei der letzten Fahrt größer als Null war, und um den aktualisierten Veränderungswert (V) reduziert, wenn der Hilfswert (H) bei der letzten Fahrt kleiner als Null war.

7. Steuereinrichtung (15) nach einem der voranstehenden Ansprüche,
**dadurch gekennzeichnet, dass** die Kennlinie (K) einen ersten Kennlinienabschnitt (K1), der sich bis zu einem Trennwert (TW) erstreckt, und einen zweiten Kennlinienabschnitt (K2), der sich ab dem Trennwert (TW) in Richtung höherer Ladezustände erstreckt, aufweist.

8. Steuereinrichtung (15) nach einem der voranstehenden Ansprüche,
**dadurch gekennzeichnet, dass** die Kennlinie (K) beim Trennwert (TW) bzw. an der Übergangsstelle zwischen dem ersten Kennlinienabschnitt (K1) und dem zweiten Kennlinienabschnitt (K2) eine Knickstelle aufweist, also mathematisch stetig, aber nicht differenzierbar ist.

9. Steuereinrichtung (15) nach einem der voranstehenden Ansprüche,
**dadurch gekennzeichnet, dass**

- sich der erste Kennlinienabschnitt (K1) von einem Ladewert, der die leere Speicherzelle beschreibt, bis zum Trennwert (TW) erstreckt, und/oder
- sich zweite Kennlinienabschnitt (K2) von dem Trennwert (TW) bis zu einem Ladewert, der die vollgeladene Speicherzelle beschreibt, erstreckt.

10. Steuereinrichtung (15) nach einem der voranstehenden Ansprüche,
**dadurch gekennzeichnet, dass** der erste Kennlinienabschnitt (K1) konstant ist und einen maximal gewünschten Ausgangsstrom (I) der Brennstoffzelle (11) beschreibt.

11. Steuereinrichtung (15) nach einem der voranstehenden Ansprüche,
**dadurch gekennzeichnet, dass** der zweite Kennlinienabschnitt (K2) linear abfallend ist und den Ausgangsstromwert an der Übergangstelle mit einem Ausgangsstrom (I) von Null durch eine Gerade verbindet.

12. Fahrzeug (10), insbesondere Schienenfahrzeug, das mit einer Brennstoffzelle (11) und einer Speichereinrichtung (12) ausgestattet ist und einen vorgegebenen Streckenabschnitt (20) befahren kann, wobei die Speichereinrichtung (12) mit dem Ausgangsstrom (I) der Brennstoffzelle (11) ladbar ist,
**dadurch gekennzeichnet, dass** das Fahrzeug (10) mit einer die Brennstoffzelle (11) ansteuernden Steuereinrichtung (15) nach einem der voranstehenden Ansprüche ausgestattet ist.

13. Verfahren zum Steuern des Ausgangsstrom (I) einer Brennstoffzelle (11), deren Ausgangsstrom (I) eine Speichereinrichtung (12) aufladen kann, während der Fahrt eines Fahrzeugs (10) in einem vorgegebenen Streckenabschnitt (20),
**dadurch gekennzeichnet, dass**

- das Steuern des Ausgangsstroms (I) der Brennstoffzelle (11) auf der Basis einer Kennlinie (K) durchgeführt wird, die den jeweiligen Ausgangsstrom (I) der Brennstoffzelle (11) während der Fahrt in dem Streckenabschnitt (20) in Abhängigkeit von dem jeweiligen Ladezustand der Speichereinrichtung (12) festlegt, wobei die Kennlinie (K) von einem Steuerparameter abhängt, und

- nach einem Durchfahren des Streckenabschnitts (20) geprüft wird, ob ein von dem mittleren Ladezustand der Speichereinrichtung (12) während der Fahrt in dem Streckenabschnitt (20) abhängiger Hilfswert (H) von einem vorgegebenen Sollwert abweicht und der Steuerparameter in Abhängigkeit von dem Ergebnis der Prüfung für die jeweils nächste Fahrt in demselben Streckenabschnitt (20) verändert wird.

14. Verfahren nach Anspruch 13,
**dadurch gekennzeichnet, dass**

- der Hilfswert (H) zumindest auch unter Heranziehung einer Integration oder Summation der den Ladezustand während der Fahrt in dem Streckenabschnitt (20) angebenden Ladezustandswerte (SoC) ermittelt wird,

- ein aktueller Veränderungswert (V) unter Bildung eines aktualisierten Veränderungswerts (V) reduziert, insbesondere halbiert, wird, wenn nach einem Durchfahren des Streckenabschnitts (20) festgestellt wird, dass der Hilfswert (H) bei der letzten Fahrt größer als der Schwellenwert und bei der vorletzten Fahrt kleiner als der Schwellenwert war oder umgekehrt bei der letzten Fahrt kleiner als der Schwellenwert und bei der vorletzten Fahrt größer als der Schwellenwert war, und

- der Steuerparameter in Abhängigkeit von dem aktualisierten Veränderungswert (V) verändert wird.

**Claims**

1. Control facility (15) for a vehicle (10), which is equipped with a fuel cell (11) and a storage facility (12) and can travel on a predetermined section of track (20), wherein the storage facility (12) can be charged with the output current (I) of the fuel cell (11), **characterised in that**

- the control facility (15) is designed so that it sets the output current (I) of the fuel cell (11) on the basis of a characteristic curve (K) which is defined for the predetermined section of track (20) and which defines the respective output current (I) of the fuel cell (11) as a function of the respective charging state of the storage facility (12), wherein the characteristic curve (K) depends on a control parameter, and

- the control facility (15) is moreover designed so that after passing through the section of track (20) it checks whether an auxiliary value (H) dependent on the average charging state of the storage facility (12) during the journey in the section of track (20) deviates from a predetermined target value and changes the control parameter as a function of the result of the check for the respectively next journey in the same section of track (20).

2. Control facility (15) according to claim 1,
**characterised in that**
the control facility (15) determines the auxiliary value (H) at least also by using an integration or summation of the charging state values (SoC) specifying the charging state during the journey in the section of track (20).

3. Control facility (15) according to one of the preceding claims,
**characterised in that**

the auxiliary value (H) is determined using an integration according to

$$\int_{t1}^{t2}(SOC(t) - SOCopt)dt$$, in particular according to

$$H = \int_{t1}^{t2}(SOC(t) - SOCopt)dt$$

wherein t1 refers to the time instant when pulling into the section of track (20), t2 refers to the time instant when leaving the section of track (20), SOC(t) refers to the charging state value (SoC) at time instant t and SOCopt refers to an average target charging state (SoCopt) in the section of track (20),
or
by using a summation

$$\sum_{i=1}^{N}(SOC(i) - SOCopt)$$, in particular according to:

$$H = \sum_{i=1}^{N}(SOC(i) - SOCopt)$$

wherein SOC (n=1) refers to the charging state value (SoC) detected first before pulling in, while pulling in or after pulling in and SOC(N) refers to the charging state value (SoC) detected last before pulling out, while pulling out or after pulling out.

4. Control facility (15) according to one of the preceding claims,
**characterised in that**
the control facility (15)

- reduces the control parameter by a predetermined change value (V) when it establishes, after passing through the section of track (20), that the auxiliary value (H) was greater than a predetermined threshold value both for the last journey and also for the penultimate journey in the section of track (20), and
- increases the control parameter by the predetermined change value (V) if it establishes, after passing through the section of track (20), that the auxiliary value (H) was lower than the threshold value both for the last journey and also for the penultimate journey in the section of track (20).

5. Control facility (15) according to one of the preceding claims,
**characterised in that**
the control facility (15) reduces, in particular halves, the current change value (V) by forming an updated change value (V), when it establishes, after passing through the section of track (20), that with the last journey the auxiliary value (H) was greater than the threshold value and with the penultimate journey was lower than the threshold value or vice versa with the last journey was lower than the threshold value and with the penultimate journey was greater than the threshold value.

6. Control facility (15) according to claim 5,
**characterised in that**

- the auxiliary value (H) is subtractively related to the average target charging state (SoCop) and the threshold value amounts to zero and
- after each update the control facility (15) reduces the control parameter by the updated change value (V) when the auxiliary value (H) was greater than zero with the last journey and reduces the same by the updated change value when the auxiliary value (H) was less than zero with the last journey.

7. Control facility (15) according to one of the preceding claims,
**characterised in that**
the characteristic curve (K) has a first characteristic curve section (K1), which extends as far as a separating value (TW), and a second characteristic curve section (K2), which extends from the separating value (TW) in the direction of higher charging states.

8. Control facility (15) according to one of the preceding claims,
**characterised in that**
with the separating value (TW) or at the transition point between the first characteristic curve section (K1) and the second characteristic curve section (K2), the characteristic curve (K) has a kink, in other words is mathematically continuous but not differentiable.

9. Control facility (15) according to one of the preceding claims,
**characterised in that**

- the first characteristic curve section (K1) extends from a charging value which describes the empty storage cell, as far as the separating value (TW), and/or
- second characteristic curve section (K2) extends from the separating value (TW) as far as a charging value which describes the fully charged storage cell.

10. Control facility (15) according to one of the preceding claims,
**characterised in that**
the first characteristic curve section (K1) is constant and describes an output current (I) of the fuel cell (11) which is desired the most.

11. Control facility (15) according to one of the preceding claims,
**characterised in that**
the second characteristic curve section (K2) is linearly sloping and connects the output current value to the transition point with an output current (I) of zero by a straight line.

12. Vehicle (10), in particular rail vehicle, which is equipped with a fuel cell (11) and a storage facility (12) and can travel on a predetermined section of track (20), wherein the storage facility (12) can be charged with the output current (I) of the fuel cell (11),
**characterised in that**
the vehicle (10) is equipped with a control facility (15), controlling the fuel cell (11), according to one of the preceding claims.

13. Method for controlling the output current (I) of a fuel cell (11), the output current (I) of which can charge a storage facility (12), during the journey of a vehicle (10) in a predetermined section of track (20),
**characterised in that**

- the output current (I) of the fuel cell (11) is controlled on the basis of a characteristic curve (K), which defines the respective output current (I) of the fuel cell (11) during the journey in the section of track (20) as a function of the respective charging state of the storage facility (12), wherein the characteristic curve (K) depends on a control parameter, and

- after passing through the section of track (20), a check is carried out to determine whether an auxiliary value (H) which is dependent on the average charging state of the storage facility (12) during the journey in the section of track (20) deviates from a predetermined target value and the control parameter is changed as a function of the result of the check for the next journey in the same section of track (20) in each case.

14. Method according to claim 13, **characterised in that**

- the auxiliary value (H) is determined at least also using an integration or summation of the charging stage values (SoC) specifying the charging state during the journey in the section of track (20),
- a current change value (V) is reduced, in particular halved, by forming an updated change value (V), when, after passing through the section of track (20), it is established that the auxiliary value (H) was greater than the threshold value with the last journey and was lower than the threshold value with the penultimate journey or vice versa was lower than the threshold value with the last journey and greater than the threshold value with the penultimate journey, and
- the control parameter is changed as a function of the updated change value (V).

**Revendications**

1. Dispositif (15) de commande pour un véhicule (10), qui est équipé d'une pile (11) à combustible et d'un dispositif (12) d'accumulation et qui peut parcourir un tronçon (20) de voie donné à l'avance, dans lequel le dispositif (12) d'accumulation peut être chargé par un courant (I) de sortie de la pile (11) à combustible, **caractérisé en ce que**

- le dispositif (15) de commande est conformé de manière à ce qu'il règle le courant (I) de sortie de la pile (11) à combustible sur la base d'une courbe (K) caractéristique, qui est fixée pour le tronçon (20) de voie donné à l'avance et qui définit le courant (I) de sortie respectif de la pile (11) à combustible en fonction de l'état de charge respectif du dispositif (12) d'accumulation, dans lequel la courbe (K) caractéristique dépend d'un paramètre de commande, et
- le dispositif (15) de commande est conformé en outre de manière à ce qu'il contrôle, après le parcours du tronçon (20) de voie, si une valeur (H) auxiliaire, qui dépend de l'état de charge moyen du dispositif (12) accumulateur pendant la circulation dans le tronçon (20) de voie, s'écarte d'une valeur de consigne donnée à l'avance, et modifie, pour la prochaine circulation sur le même tronçon (20) de voie, le paramètre de commande en fonction du résultat du contrôle.

2. Dispositif (15) de commande suivant la revendication 1, **caractérisé en ce que**
le dispositif (15) de commande détermine la valeur (H) auxiliaire au moins également en tirant parti d'une intégration ou d'une sommation des valeurs (SoC) d'état de charge indiquant l'état de la charge pendant la circulation dans le tronçon (20) de voie.

3. Dispositif (15) de commande suivant l'une des revendications précédentes,
**caractérisé en ce que**

l'on détermine la valeur (H) auxiliaire en tirant parti d'une intégration suivant

$$\int_{t1}^{t2}(SOC(t) - SOCopt)\,dt$$

, en particulier suivant :

$$H = \int_{t1}^{t2}(SOC(t) - SOCopt)\,dt$$

dans laquelle t1 désigne l'instant d'entrée dans le tronçon (20) de voie, t2 désigne l'instant de sortie du tronçon (20) de voie, SOC(t) désigne la valeur (SoC) de la charge à l'instant t et SOCopt désigne un état (SoCopt) de charge de consigne moyen dans le tronçon (20) de voie, ou
en tirant parti d'une sommation

$$\sum_{i=1}^{N}(SOC(i) - SOCopt)$$

, en particulier suivant :

$$H = \sum_{i=1}^{N}(SOC(i) - SOCopt)$$

dans laquelle SOC(n=1) désigne la première valeur (SoC) d'état de charge détectée avant l'entrée, à l'entrée ou après l'entrée et SOC(N) désigne la dernière valeur (SoC) d'état de charge détectée avant la sortie, à la sortie ou après la sortie.

**4.** Dispositif (15) de commande suivant l'une des revendications précédentes, **caractérisé en ce que** le dispositif (15) de commande

- réduit le paramètre de commande d'une valeur (V) de modification donnée à l'avance, s'il constate, après un parcours du tronçon (20) de voie, que la valeur (H) auxiliaire était, tant pour la dernière circulation qu'également pour l'avant dernière circulation dans le tronçon (20) de voie, plus grande qu'une valeur de seuil donnée à l'avance, et
- augmente le paramètre de commande de la valeur (V) de modification donnée à l'avance, s'il constate, après un parcours du tronçon (20) que la valeur (H) auxiliaire était, tant pour la dernière circulation qu'également pour l'avant dernière circulation dans le tronçon (20) de voie, plus petite que la valeur de seuil.

**5.** Dispositif (15) de commande suivant l'une des revendications précédentes, **caractérisé en ce que** le dispositif (15) de commande réduit, en particulier divise par deux la valeur (V) de modification en cours avec une formation d'une valeur (V) de modification actualisée, s'il constate, après un parcours du tronçon (20) de voie que la valeur (H) auxiliaire lors de la dernière circulation, était plus grande que la valeur de seuil, et lors de l'avant dernière circulation plus petite que la valeur de seuil ou inversement plus petite lors de la dernière circulation que la valeur de seuil et plus grande lors de l'avant dernière circulation que la valeur de seuil.

**6.** Dispositif (15) de commande suivant la revendication 5, **caractérisé en ce que**

- la valeur (H) de seuil est rapportée soustractivement à l'état (SoCopt) de charge de consigne moyen et la valeur de seuil est de zéro et
- le dispositif (15) de commande réduit, après chaque actualisation le paramètre de commande de la valeur (V) de modification actualisée, si la valeur (H) de seuil, lors de la dernière circulation, était plus grande que zéro, et réduit la valeur (V) de modification actualisée, si la valeur (H) de seuil, lors de la dernière circulation, était plus petite que zéro.

**7.** Dispositif (15) de commande suivant l'une des revendications précédentes, **caractérisé en ce que** la courbe (K) caractéristique a une première partie (K1) de courbe caractéristique, qui s'étend jusqu'à une valeur (TW) de séparation, et une deuxième partie (K2) de courbe caractéristique, qui s'étend de la valeur (TW) de séparation en direction d'états de charge plus grands.

**8.** Dispositif (15) de commande suivant l'une des revendications précédentes, **caractérisé en ce que** la courbe (K) caractéristique a, à la valeur (TW) de séparation ou au point de transition, entre la première partie (K1) de la courbe caractéristique et la deuxième partie (K2) de la courbe caractéristique, un coude, en étant donc continue mathématiquement mais non différentiable.

**9.** Dispositif (15) de commande suivant l'une des revendications précédentes, **caractérisé en ce que**

- la première partie (K1) de la courbe caractéristique s'étend d'une valeur de charge, qui décrit l'élément d'accumulateur vide jusqu'à la valeur (TW) de séparation, et/ou
- la deuxième partie (K2) de la courbe caractéristique s'étend de la valeur (TW) de séparation jusqu'à une valeur de charge, qui décrit l'élément d'accumulateur chargé complètement.

**10.** Dispositif (15) de commande suivant l'une des revendications précédentes, **caractérisé en ce que** la première partie (K1) de la courbe caractéristique est constante et décrit un courant (I) de sortie souhaité au maximum de la pile (11) à combustible.

**11.** Dispositif (15) de commande suivant l'une des revendications précédentes, **caractérisé en ce que** la deuxième partie (K2) de la courbe caractéristique est décroissante linéairement et relie par une droite la valeur de courant de sortie au point de transition à un courant (I) de sortie de zéro.

**12.** Véhicule (10), en particulier véhicule ferroviaire, qui est équipé d'une pile (11) à combustible et d'un dispositif (12) accumulateur et qui peut parcourir un tronçon (20) de voie donné à l'avance, dans lequel le dispositif (12) accumulateur peut être chargé par le courant (I) de sortie de la pile (11) à combustible, **caractérisé en ce que** le véhicule (10) est équipé d'un dispositif (15) de commande suivant l'une des revendications précédentes commandant la pile (11) à combustible.

**13.** Procédé de commande du courant (I) de sortie d'une pile (11) à combustible, dont le courant (I) de sortie peut charger un dispositif (12) accumulateur pendant le trajet d'un véhicule (10) dans un tronçon (20) de voie donné à l'avance,
**caractérisé en ce que**

- on effectue la commande du courant (I) de sortie de la pile (11) à combustible sur la base d'une courbe (K) caractéristique, qui fixe le courant (I) de sortie respectif de la pile (11) à combustible pendant la circulation dans le tronçon (20) de voie en fonction de l'état de charge respectif du dispositif (12) accumulateur, la courbe (K) caractéristique dépendant d'un paramètre de commande, et

- après un parcours du tronçon (20) de voie, on contrôle, si une valeur (H) auxiliaire, qui dépend de l'état de charge moyen du dispositif (12) accumulateur pendant le trajet dans le tronçon (20) de voie, s'écarte d'une valeur de consigne donnée à l'avance et on modifie le paramètre de commande en fonction du résultat du contrôle pour la circulation prochaine dans le même tronçon (20) de voie.

14. Procédé suivant la revendication 13,
**caractérisé en ce qu'**

- on détermine la valeur (H) auxiliaire au moins également en tirant parti d'une intégration d'une sommation des valeurs (SoC) d'état de charge indiquant l'état de charge pendant la circulation dans la section (20) de voie,

- on réduit une valeur (V) de modification en cours, avec formation d'une valeur (V) de modification actualisée, en particulier divisée par deux, si, après un parcours du tronçon (20) de voie, on constate que la valeur (H) auxiliaire lors de la dernière circulation était plus grande que la valeur de seuil et, lors de l'avant dernière circulation, plus petite que la valeur de seuil ou inversement plus petite lors de la dernière circulation que la valeur de seuil et, lors de l'avant dernière circulation, plus grande que la valeur de seuil, et

- on modifie le paramètre de commande en fonction de la valeur (V) de modification actualisée.

FIG 1

FIG 2

EP 4 063 183 B1

FIG 3

FIG 4

SoC(t)

151

152

153

ZS1

ZS2

+

−

H

154

V

155

ST

FIG 5

FIG 6

$$Hk=H-(SoCstart-SoCopt)$$ — 99

Hk>0 ? — 100

Hk>0     Hk<0

Hk*Hk' — 110

Hk*Hk'<0     Hk*Hk'>0

$$V=V'/2$$     $$V=V'$$ — 120

$$TW=TW'-V$$ — 130

Hk*Hk' — 110

Hk*Hk'<0     Hk*Hk'>0

$$V=V'/2$$     $$V=V'$$ — 120

$$TW=TW'+V$$ — 130

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017213088 A1
- DE 102018004716 A1